# EUROPEAN PATENT SPECIFICATION

(11) **EP 1 092 968 B1**
(45) Date of publication and mention of the grant of the patent: **30.05.2007**
(21) Application number: 00119685.6
(22) Date of filing: 08.09.2000
(51) Int. Cl.: G01M 15/00, G01L 23/22

(54) **Combustion analysing method for an internal combustion engine**
Verfahren zur Verbrennungsanalyse für einen Verbrennungsmotor
Méthode d'analyse de combustion pour moteur à combustion interne

(30) Priority: 15.10.1999 LU 90460
(43) Date of publication of application: 18.04.2001
(73) Proprietor: Delphi Technologies, Inc., Troy, MI 48007 (US)
(72) Inventor: Divo, Jean-Philippe, 3926 Mondercange (LU)
(74) Representative: Beissel, Jean

(56) References cited:
- DE-A- 19 822 296

## Description

### Field of the invention

The present invention relates to a combustion analysing method for an internal combustion engine; in particular for a spark-ignition engine, wherein a spark-plug is used as an ion density measurement probe.

### Background of the invention

During combustion of a combustible mixture in an internal combustion engine, gas molecules are ionised. These ionised gas molecules can be detected by an ion density measurement probe, i.e. a pair of spaced electrodes between which a voltage is applied. The current flowing in the measuring circuit connected to the electrodes is a direct image of the ion density in the combustion chamber. The measured signal is called the ion current signal. Since the ion current signal sensibly changes in response to combustion conditions within the combustion chamber, combustion conditions can be monitored by analysing the ion current signal. Thus, an analysis of the ion current signal allows e.g. to detect if and when ignition of the mixture has taken place, to control mixture parameters and to detect combustion knock.

In a spark-ignition engine the gas mixture in the combustion chamber is ignited by a spark produced in the electrode gap of a spark plug. After extinction of the spark, the two electrodes of the spark plug can be advantageously used as ion density measurement probe. A combustion condition detector using the spark plug as ion density probe is e.g. described in US-A-5,675,072, or in DE 19822296 A1.

A problem with such a combined ignition-ion sense system is that the ion current signal in the processing circuitry is disturbed by so called coil ring-out oscillations. These "coil ring-out" oscillations are exponentially decreasing sinusoidal oscillations in the measured ion current signal, which are due to the relief of residual energy stored in the ignition coil after extinction of the spark.

Using an ion current signal which is polluted by the coil ring-out oscillations for evaluating combustion conditions in the engine, will inevitably result in misinterpretations. Thus it is known to start the analysis window after a predetermined delay from the ignition signal, i.e. the signal from the engine controller which causes the ignition coil to discharge itself. It is further known to determine this delay from a look-up table in function of engine speed and other relevant factors. Such a look-up table is set up by time consuming calibration operations on the engine, which are moreover complicated by the fact that "coil ring-out" may be different for each combustion chamber of an engine. It will be appreciated that in case of bad calibration or changing operating conditions, it may be that an important part of the useful ion current signal is truncated, because the delay of the start of the analysis window is too long, but it may also be that coil ring-out oscillation are perceived as useful ion current signals, because the delay of the start of the analysis window is too short.

In the combustion condition detector described in US-A-5,675,072, the delay for starting the analysing window is determined by a rather complicated sensing period setting circuit. This circuit seems to allow some sort of adaptive control of the start of the analysis window. It seems in particular that high frequency noise signals are clipped out by an analogous filter and that the start of the analysis window is then triggered when the filtered ion current signal exceeds a pre-set threshold.

### Object of the invention

The technical problem underlying the present invention is to provide a simple and efficient combustion analysing method for an internal combustion engine in which the start of the analysis window is further optimised. This problem is solved by a method as claimed in claim 1.

### Summary of the invention

A combustion analysing method in accordance with the present invention generally applies to an internal combustion engine in which a combustible mixture is ignited in a combustion chamber by a spark produced by a spark plug associated with an ignition coil. An ion current signal, which is responsive to ion density in the combustion chamber, is sensed by applying a bias voltage to the spark plug. Immediately after the end of spark, the ion current signal is disturbed by decreasing coil ring-out oscillations. An analysis start point is determined (i.e. an analysis window is opened) and the ion current signal is analysed to obtain information about ion density in the combustion chamber. In accordance with an important aspect of the present invention, the analysis start point is determined as follows. The sensed ion current signal is first converted into a digital ion current signal. The latter is filtered by means of a digital filter, wherein this digital filter is designed so as to obtain a filtered digital ion current signal showing one single ring-out peak. After firing of the spark, the end of spark is detected. Then the occurrence of a first local minimum of the filtered digital ion current signal following the end of spark is detected. Occurrence of this first local minimum is used to determine the analysis start point. It will be appreciated that the method of the present invention allows to analyse a more complete part of the useful ion current signal, while nevertheless rejecting with great reliability coil ring-out oscillations. This will help to improve any combustion diagnostic that is based on an ion density measurement in the combustion chamber. It will in particular improve detection of phenomena that take place very soon after the end of spark. In addition, calibration time of the combustion analysing method will be significantly reduced. It will e.g. no longer be necessary to verify the analysis start point for different spark plugs, ignition coils, fuels, environmental conditions etc..

It will further be appreciated that efficiency of misfire detection can be improved by setting e.g. a "No ignition"-flag if no local minimum of the filtered digital ion current signal is detected within a pre-set time limit from the end of spark.

In a preferred embodiment, the end of spark detection is based on the detection of an end of spark peak in the unfiltered digital ion current signal after the firing of the spark. This can for example be done by using an ignition signal from an ignition controller, which is associated with the engine, for triggering an end of spark peak detection step. During this step an "End of spark"-flag is set when the unfiltered digital ion current signal exceeds a pre-set threshold.

The digital ion current signal is preferably offset-compensated. The offset compensated signal can be advantageously used to determine an analysis stop point (i.e. to close the analysis window) when, after detection of the first local minimum of the filtered digital ion current signal following the end of spark, the offset-compensated digital ion current signal falls below a threshold value. Offset-compensating the digital ion current signal comprises the steps of: (1) determining a mean value of the digital ion current signal during a window just before charging the ignition coil; and (2) subtracting the mean value from the digital ion current signal. In this context it should be noted that at a given moment the ignition coil is charged under control of an ignition controller, which is associated with the engine.

The method may be carried out in real time or in pseudo real time. If the method is carried out in pseudo real time, it is possible to compensate a phase-shift between the filtered and unfiltered ion current signal. For this purpose, the unfiltered digital ion current samples are stored in a buffer. The digital ion current signal is then reconstituted from the buffer, taking into account that the first local minimum is detected with a certain time delay due to the digital filter. This pseudo real time approach even further improves useful signal extraction, while warranting a reliable rejection of coil ring-out oscillations.

The digital filter can be a very simple linear filter, as for example a filter of the b-squared form that is characterised by a filter vector with following coefficients:
[1, 2, ... , b-1, b, b-1, ..., 2, 1]/b².

If such a filter is used, the pseudo real time approach comprises the steps of: (1) sequentially storing the unfiltered digital ion current samples in a buffer; and (2) reconstituting the digital ion current signal from the buffer moving back in time for b samples.

### Brief description of the drawings

The present invention will now be described, by way of example, with reference to the accompanying drawings, in which:
- Fig. 1: is a simplified representation of a known combined ignition/ion-sense system;
- Fig. 2: is a diagram showing a typical profile of an ion current signal, sensed in a circuit as shown in Fig. 1, wherein the time origin corresponds to the start of the spark;
- Fig. 3: is a diagram as shown in Fig. 2, showing two different ion current signals;
- Fig. 4: is a block diagram illustrating start optimisation of an analysis window;
- Fig. 5: is a block diagram illustrating end optimisation of an analysis window;
- Fig. 6: is a diagram as shown in Fig. 2, comparing different ion current signals used in a combustion analysing method in accordance with the present invention;
- Fig. 7: is a diagram showing measured time delays for the analysis window start, with start optimisation in accordance with the present invention; and
- Fig. 8: is a diagram as shown in Fig. 2, showing two different ion current signals and illustrating the effect of window start optimisation in accordance with the present invention.

### Detailed description of a preferred embodiment

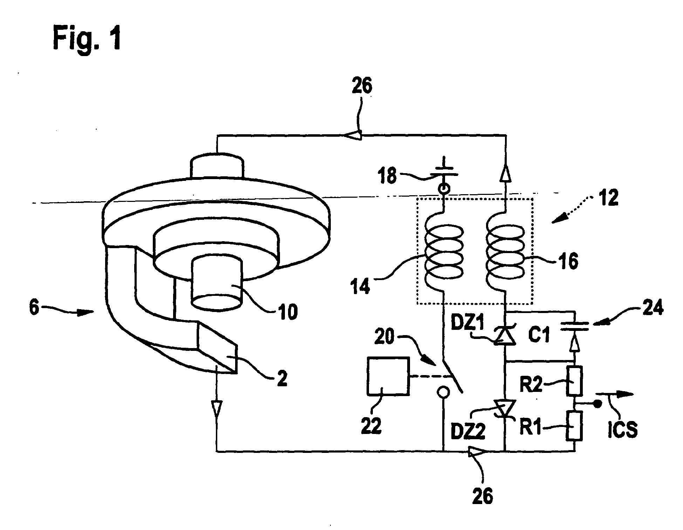

Fig. 1 is a simplified representation of a known ignition/ion-sense system for an internal combustion engine that works according to a spark-ignition cycle. A spark plug 6, which is screwed in the combustion chamber of a cylinder of the engine (not shown), is represented by its electrodes 2, 10. Reference number 12 globally identifies an ignition coil 12 associated with the spark plug 6. This ignition coil 12 consists of a primary coil 14, with relatively few windings, a secondary coil 16, with a large number of windings, and a common magnetic core for both coils 14, 16. The primary coil 14 is connected to a battery 18 and to an electronic current breaker 20, which is operatively connected to an ignition controller 22. The high electromotive force which is required for producing a spark between the electrodes 8, 10 of the spark plug 6 is induced in the secondary coil 16 by a sudden change in the magnetic flux in the common magnetic core of the ignition coil 12 when the charging current through the primary coil 14 is interrupted by the electronic current breaker 20 under the control of the ignition controller 22.

In the ignition system shown in Fig. 1, the spark plug 6 is used as an ion density detector in the combustion chamber. An ion current sensing circuitry 24 is mounted in series with the secondary coil 16 and comprises mainly a bias voltage generating unit and a current to voltage converting unit. The bias voltage generating unit comprises a capacitor C1. This capacitor C1 is charged during the spark event to a bias voltage that is limited by a Zener diode DZ1. After the spark event, this bias voltage generates an electric field between the electrodes 8, 10. This electric field acts on ionised gas molecules in the cylinder, so that an ion flow establishes between the electrons 8, 10. As a result of this ion flow, a current 26 establishes in the ignition circuit. This current is a direct image of the ion density in the combustion chamber. It is monitored as a voltage drop across resistor R1 and called the "ion current signal" (in the Figures the ion current signal is called "ICS" or "ion sense"). A second Zener diode DZ2 is used to clip a large negative current peak during the spark event from the measuring resistor R1.

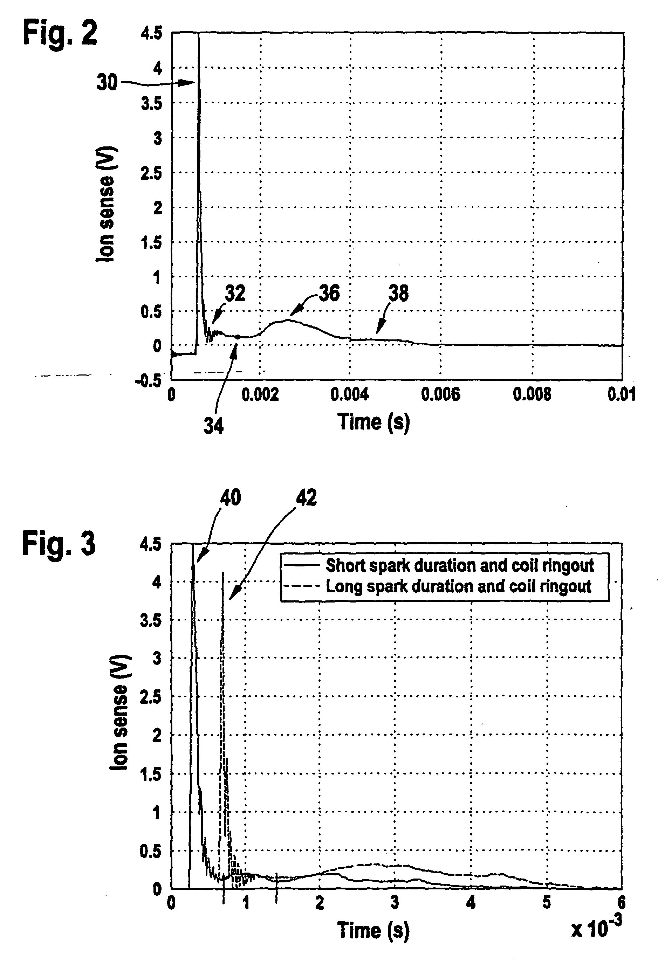

Referring now to Fig. 2, the typical profile of an ion current signal, which has been sensed with a circuit as shown in Fig. 1, will be described in detail. The time origin in the diagram corresponds to the start of the spark between the electrodes 8, 10. During the spark event, the ion current signal is approximately 0 Volt, because the Zener diode DZ2 clips the spark producing current from the measuring resistor R1. A large positive peak 30, which results in a saturation of the measuring system, corresponds to the end of spark, i.e. the moment when the spark suddenly collapses. This positive end of spark peak 30 is followed by a so-called coil ring-out 32, i.e. exponentially decreasing sinusoidal oscillations in the measured ion current signal. As already explained above, these ring-out oscillations are due to electromagnetic oscillations in the coil 22 and have nothing to do with ion density in the combustion chamber. These oscillations must be disregarded when analysing the ion current signal in order not arrive at false conclusions concerning combustion conditions. Arrow 34 identifies a point where the ring-out oscillations 32 have nearly completely disappeared. The profile of the measured signal is now mainly determined by ion density in the cylinder. Arrow 36 identifies the so-called flame front, which is due to a increase of ion density in the combustion chamber due to ionisation of gas molecules in the reaction zone of the propagating flame. As the flame front leaves the spark plug vicinity, the ion current signal decreases again. Arrow 38 identifies a so-called post flame region, in which there is again an increase of the ion current signal due to thermal ionisation of species generated during the combustion process.

In Fig. 3 the ion current signals of two different cylinders are shown. The ion current signal identified by reference number 40 (continuous line) is characterised by a short spark duration and relatively weak and rapidly decreasing ring-out oscillations. A combustion analysis window could already start 0.8 ms after spark start, without being significantly disturbed by ring-out oscillations. The ion current signal identified by reference number 42 (interrupted line) is characterised by a long spark duration and by important and slowly decreasing ring-out oscillations. A combustion analysis window could only start 1.3 ms after spark start.

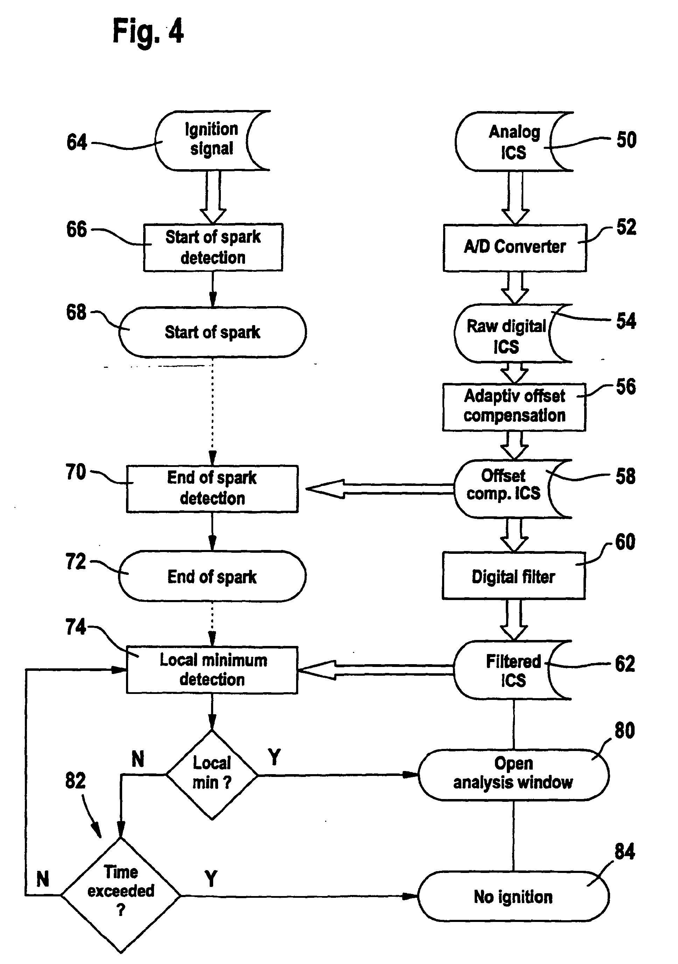

Fig. 4 is a block diagram illustrating start optimisation of an analysis window in a combustion analysing method for an internal combustion engine working according to a spark ignition cycle.

Reference number 50 identifies the analogue ion current signal (ICS), which is e.g. measured across measuring resistor R1 in the circuit of Fig. 1. This analogue signal 50 is transformed by an analogue to digital converter 52 in a raw digital ion current signal 54. If combustion knock has to be analysed, then a rather high sampling frequency should be used for the analogue to digital conversion. Good results have been obtained by using e.g. a sampling frequency of about 40 kHz. For analysing other phenomena than combustion knock, the sampling frequency can usually be less high. It should also be noted that the analogue ion current signal is advantageously passed through a properly designed anti-aliasing filter before being digitised in the analogue to digital converter 52.

The next step is an adaptive offset compensation 56. This adaptive offset compensation, which is optional, can e.g. be carried out as follows. A mean value for the raw digital ion current signal is calculated for a limited signal window just before the charge of the coil 22. It will indeed be noted that at this moment ion density in the cylinder is at minimum and there are no transient phenomena taking place in the coil 22. The calculated mean value is then subtracted from the raw digital ion current signal 54 and an offset compensated ion current signal 58 is obtained. Thus any cause of offset or drift in the sensing circuitry is automatically and continuously compensated.

Reference number 60 identifies a digital filter that is applied to the offset compensated digital ion current signal 58 to provide a filtered offset compensated digital ion current signal 62. This digital filter 60 is designed so as to be capable of smoothing the exponentially decreasing, sinusoidal ring-out oscillations in such a way to produce one single ring-out peak only. It has been found out that this digital filter 60 can be a rather simple linear filter) as e.g. a moving average filter. Good results have been obtained with a so-called b-squared filter, i.e. a filter characterised by a filter vector with following coefficients:
[1, 2, ... , b-1, b, b-1, ..., 2, 1]/b²

Parameter b is an integer that will be set taking into account the sampling frequency of the analogue to digital converter 52 and the frequency of the ring-out oscillations, wherein this ring-out frequency is mainly determined by the characteristics of the ignition coil 22 and the measuring circuit 24. For a sampling frequency of 40 kHz, good results have for example been obtained with parameter b set in the range of 8-12.

Reference number 64 identifies an ignition signal from the engine controller 22. This ignition signal 64 is used for a start of spark detection step 66. A "Start of spark"-flag 68 is set in case of an ignition signal from the engine controller 22 for the respective cylinder. Setting the "Start of spark"-flag 68 triggers the start of an end of spark detection procedure 70, which is preferably carried out on the offset compensated digital ion current signal 58, but could also be carried out on the raw digital ion current signal 54, in particular if the signal offset is small or relatively constant in time. The end of spark detection procedure 70 comprises e.g. a comparison of the offset compensated digital ion current signal with an end of spark threshold. This threshold which will usually be set in function of the saturation characteristics of the ion current sensing circuitry, because the end of spark peak (peak 30 in Fig. 2) typically results in a saturation of the ion current sensing circuitry. If the end of spark threshold is exceeded, an "End of Spark"-flag 72 is set. This event flag 72 triggers the start of a local minimum detection procedure 74 that is carried out on the filtered offset compensated digital ion current signal 62, or on the raw digital ion current signal 54.

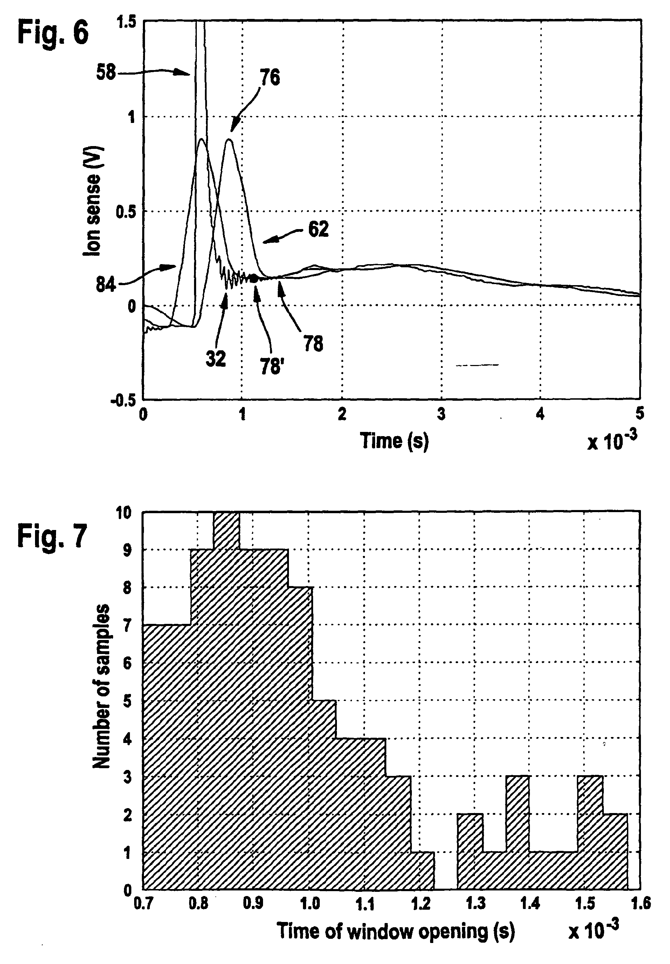

Referring to the diagram of Fig. 6, the effect of the local minimum detection procedure 74 will now be described. In the diagram the offset compensated digital ion current signal is identified by reference number 58, whereas reference number 62 identifies the same signal after the digital filtration described above. The unfiltered signal 58 shows important ring-out oscillations identified by reference number 32. These exponentially decreasing ring-out oscillations 32 are transformed by the digital filter 60 in a single peak identified by reference number 76. The local minimum detection procedure 74 detects the first local minimum 78 of the filtered signal 62 after the "End of spark"-flag 72 is set. Considering the profile of the unfiltered signal 58, it will be appreciated that the remaining ring-out oscillations 32 have as good as completely died away when the first local minimum 78 of the filtered signal 62 occurs. In other words, after occurrence of this local minimum 78, the unfiltered signal 58 is no longer disturbed by the so-called ring-out phenomenon of the coil 12 and this unfiltered signal 58 can be used for combustion analysis purposes.

Coming back to Fig. 4 it will be noted that if a local minimum is detected, then an "Open analysis Window"-flag 80 is set. However, local minimum detection 74 takes only place in a limited window after the "End of Spark"-flag 70 is set. This time limitation is illustrated by time-loop 82. The latter starts when the "End of spark"-flag 72 is set. If a pre-set detection time is exceeded without detecting a local minimum, then a "No ignition"-flag 84 is set. Physically speaking this means that there has been no ignition of the combustible mixture producing a rise of the filtered ion current signal 62 within a pre-set delay after the end of spark.

Coming back again to Fig. 6 it will be noted that the digital filtering operation that is carried out on the unfiltered signal 58 produces a phase-shift of the filtered signal 62. This phase shift can be easily compensated taking into account a signal delay produced by the digital filter 60. In the diagram of Fig. 6 phase-shift compensated filtered signal is identified by reference number 84. Reference number 78' identifies the local minimum of the phase-shift compensated filtered signal 84. If the phase-shift compensated minimum 78' is used to set the "Open analysis window"-flag 80, then the offset compensated digital ion current signal 58 must of course be stored in a buffer and the ion current signal to be analysed must be reconstituted from this buffer starting from the instant when the phase-shift compensated minimum 78' occurs. For example, if a b-squared filter as described above is used, it will be sufficient to store the last "b" digital signal values in a buffer and to reconstitute the signal from this buffer.

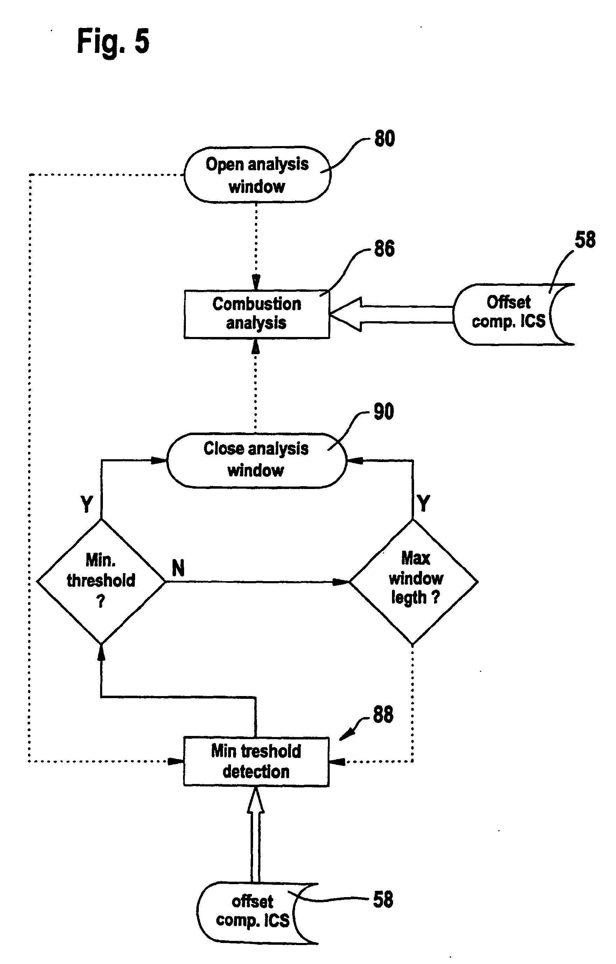

Fig. 5 is a block diagram illustrating end optimisation of an analysis window. Setting the "Open analysis window"-flag 80 triggers the start of a combustion analysis module 86 analysing the offset compensated digital ion current signal 58. At the same time, it triggers a minimum threshold detection procedure 88. If the offset compensated digital ion current signal 58 falls below a preset threshold, then a "Close Analysis Window"-flag 90 is set. The same flag 90 is also set when a maximum window length (in other words the maximum observation time) is exceeded. Setting the "Close analysis window"-flag 90 triggers the stop of the combustion analysis module 86. It will be noted that end optimisation of an analysis window is optional. The opening time of the analysis window can also be pre-set as a function of engine speed and other factors.

The diagram of Fig. 7 shows a distribution of measured delays between spark firing and analysis window opening, using start optimisation of an analysis window in accordance with the present invention. It should be appreciated that a traditional system would have applied a delay of 1,6 ms for all samples.

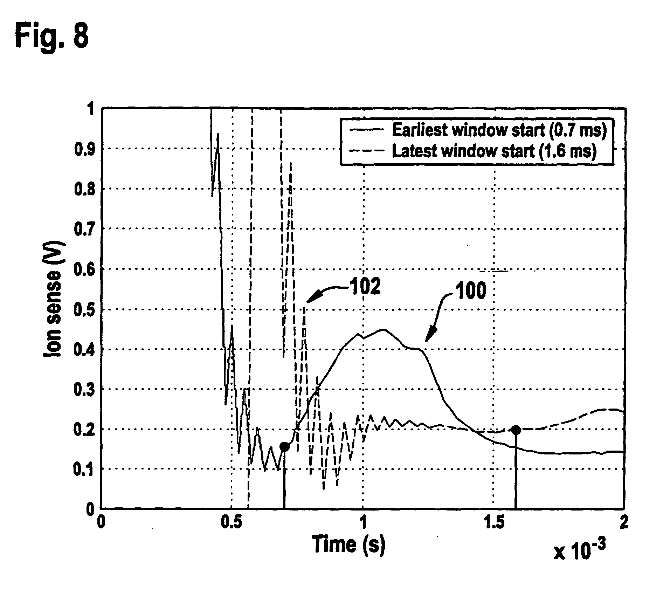

The diagram of Fig. 8 helps to understand how the smart windowing technique of the present invention helps to improve combustion analysis. As shown in the diagram, the analysis window is automatically started with a delay of 0.7 ms for the signal plotted with a continuous line and with a delay of 1.6 ms for the signal plotted with a discontinuous line. Assuming on the one hand that the delay between spark firing and analysis window opening had been set to 1.6 ms for both signals, an important portion 100 in the signal plotted with a continuous line would have been ignored. In some cases this could result e.g. in the erroneous conclusion that there has been a misfire. Assuming on the other hand that the delay between spark firing and analysis window opening had been set to 0.7 ms for both signals, important ring-out oscillations 102 would have completely spoilt the analysis of the signal plotted with a discontinuous line.

In conclusion, the smart windowing technique of the present invention helps to get a more complete part of the useful ion current signal, while nevertheless rejecting with great reliability coil ring-out oscillations. This will help to improve efficiency of misfire detection or of any other combustion diagnostic that is based on an ion density measurement in the combustion chamber. It also enables to properly detect the end of the useful ion current signal, thus reducing the risk of picking up noise due to ignition in other cylinders. In addition, calibration time will be significantly reduced.

## Claims

1. A combustion analysing method for an internal combustion engine, in which a combustible mixture is ignited in a combustion chamber by a spark produced by a spark plug associated with an ignition coil, said method comprising the steps of:
applying a bias voltage to the spark plug;
sensing an ion current signal which is responsive to ion density in said combustion chamber when said bias voltage is applied to said spark plug, wherein said ion current signal is disturbed by decreasing coil ring-out oscillations immediately after end of spark;
determining an analysis start point;
analysing the ion-current signal to obtain information about ion density in the combustion chamber;
**characterised in that** the analysis start point is determined by using following steps:
converting the sensed ion current signal into a digital ion current signal;
filtering said digital ion current signal by means of a digital filter, wherein said digital filter is designed so as to obtain a filtered digital ion current signal showing one single ring-out peak;
detecting the end of spark;
detecting the occurrence of a first local minimum of said filtered digital ion current signal following the end of spark; and
using the occurrence of said first local minimum to determine the analysis start point.

2. The method as claimed in claim 1, **characterised in that** the step of detecting the end of spark comprises detecting an end of spark peak in the unfiltered digital ion current signal after the firing of the spark.

3. The method as claimed in claim 2, **characterised in that** detecting the end of spark peak in the unfiltered digital ion current signal comprises:
using an ignition signal from an ignition controller, which is associated with said engine, for triggering an end of spark peak detection step.

4. The method as claimed in claim 3, **characterised in that** said end of spark peak detection step comprises:
setting an "End of spark"-flag when said unfiltered digital ion current signal exceeds a pre-set threshold.

5. The method as claimed in any one of claims 1 to 4, **characterised by:**
offset-compensating said digital ion current signal; and
stopping analysing the ion current signal when, after detection of said first local minimum of said filtered digital ion current signal following the end of spark, said offset-compensated digital ion current signal falls below a threshold value.

6. The method as claimed in claim 5, wherein said ignition coil is charged at a given moment under control of an ignition controller, which is associated with said engine, **characterised in that** the step of offset-compensating the digital ion current signal comprises the steps of:
determining a mean value of the digital ion current signal during a window just before charging the ignition coil; and
subtracting said mean value from the digital ion current signal.

7. The method as claimed in any one of claims 1 to 6, **characterised by:**
storing unfiltered digital ion current samples in a buffer; and
reconstituting the digital ion current signal from said buffer, taking into account that said first local minimum is detected with a certain time delay due to said digital filter.

8. The method as claimed in any one of claims 1 to 7, **characterised in that** said digital filter is a linear filter.

9. The method as claimed in claim 8, **characterised in that** said digital filter is of the b-squared form.

10. The method as claimed in claim 9, **characterised by** a filter vector with following coefficients (b being an integer):
[1, 2, ... , b-1, b, b-1, ..., 2, 1]/b²

11. The method as claimed in claim 10, **characterised in that** the step of analysing the ion current signal comprises the steps of:
sequentially storing the unfiltered digital ion current samples in a buffer; and
reconstituting the digital ion current signal from said buffer moving back in time for b samples.

12. The method as claimed in any one of claims 1 to 11, **characterised in that** a "No ignition"-flag is set if no local minimum of said filtered digital ion current signal is detected within a pre-set time limit from said end of spark.

## Patentansprüche

1. Verfahren zur Verbrennungsanalyse für einen Verbrennungsmotor, bei dem ein brennbares Gemisch in einem Brennraum durch einen Funken gezündet wird, der durch eine einer Zündspule zugeordnete Zündkerze erzeugt wird, wobei das Verfahren folgende Schritte umfasst
Anlegen einer Vorspannung an die Zündkerze;
Erfassen eines lonenstromsignals, das auf die lonendichte im Brennraum anspricht, wenn die Vorspannung an die Zündkerze angelegt wird, wobei das lonenstromsignal durch abnehmende Entladungsoszillationen der Spule unmittelbar nach dem Funkenende gestört wird;
Bestimmen eines Analysestartpunkts;
Analysieren des lonenstromsignals, um Informationen über die lonendichte im Brennraum zu erhalten;
**dadurch gekennzeichnet, dass** der Analysestartpunkt durch den Einsatz folgender Schritte bestimmt wird:
Umwandeln des erfassten lonenstromsignals in ein digitales lonenstromsignal;
Filtern des digitalen lonenstromsignals mittels eines digitalen Filters, wobei der digitale Filter so ausgelegt ist, dass ein gefiltertes digitales lonenstromsignal erhalten wird, das einen einzigen Entladungspeak zeigt;
Erfassen des Funkenendes;
Erfassen des Auftretens eines ersten lokalen Minimalwerts des gefilterten digitalen lonenstromsignals, der dem Funkenende folgt; und
Verwenden des Auftretens des ersten lokalen Minimalwerts, um den Analysestartpunkt zu bestimmen

2. Verfahren nach Anspruch 1, **dadurch gekennzeichnet, dass** der Schritt zum Erfassen des Funkenendes das Erfassen eines Funkenendepeaks im ungefilterten digitalen lonenstromsignal nach Zündung des Funkens umfasst

3. Verfahren nach Anspruch 2, **dadurch gekennzeichnet, dass** das Erfassen des Funkenendepeaks im ungefilterten digitalen lonenstromsignal Folgendes umfasst:
Verwendung eines Zündsignals von einer dem Motor zugeordneten Zündungssteuerung, um den Schritt zum Erfassen des Funkenendepeaks auszulösen.

4. Verfahren nach Anspruch 3, **dadurch gekennzeichnet, dass** der Schritt zum Erfassen des Funkenendepeaks Folgendes umfasst
Setzen eines "Funkenende"-Kennzeichens, wenn das ungefilterte digitale lonenstromsignal einen vorgegebenen Schwellwert überschreitet

5. Verfahren nach irgendeinem der Ansprüche 1 bis 4, **gekennzeichnet durch**:
Offsetabgleich des digitalen lonenstromsignals; und
Stoppen der Analyse des lonenstromsignals, wenn nach dem Erfassen des ersten lokalen Minimalwerts des gefilterten digitalen lonenstromsignals, der dem Funkenende folgt, das offsetabgeglichene digitale lonenstromsignal unter einen Schwellwert fällt

6. Verfahren nach Anspruch 5, wobei die Zündspule unter der Steuerung einer dem Motor zugeordneten Zündungssteuerung zu einem vorgegebenen Zeitpunkt geladen wird, **dadurch gekennzeichnet, dass** der Schritt zum Offsetabgleich des digitalen lonenstromsignals folgende Schritte umfasst:
Bestimmen eines Mittelwerts des digitalen lonenstromsignals während eines Fensters kurz vor dem Laden der Zündspule; und
Subtrahieren des Mittelwerts von dem digitalen lonenstromsignal.

7. Verfahren nach irgendeinem der Ansprüche 1 bis 6, **gekennzeichnet durch**:
Speichern von ungefilterten digitalen lonenstrom-Abtastwerten in einem Puffer; und
Wiederherstellen des digitalen lonenstromsignals aus dem Puffer, wobei beachtet wird, dass der erste lokale Minimalwert mit einer bestimmten Zeitverzögerung erfasst wird, die **durch** den digitalen Filter bedingt ist.

8. Verfahren nach irgendeinem der Ansprüche 1 bis 7, **dadurch gekennzeichnet, dass** der digitale Filter ein linearer Filter ist

9. Verfahren nach Anspruch 8, **dadurch gekennzeichnet, dass** der digitale Filter in b-quadriert-Form vorliegt.

10. Verfahren nach Anspruch 9, **gekennzeichnet durch** einen Filtervektor mit folgenden Koeffizienten, wobei b eine Ganzzahl ist:
[1, 2, ... , b-1, b, b-1, ..., 2, 1]/b²

11. Verfahren nach Anspruch 10, **dadurch gekennzeichnet, dass** der Schritt zum Analysieren des lonenstromsignals folgende Schritte umfasst:
sequentielles Speichern der ungefilterten digitalen lonenstrom-Abtastwerte in einem Puffer; und
Wiederherstellen des digitalen lonenstromsignals aus dem Puffer, wobei in der Zeit um b Abtastwerte zurückgegangen wird.

12. Verfahren nach irgendeinem der Ansprüche 1 bis 11, **dadurch gekennzeichnet, dass** ein "Keine Zündung"-Kennzeichen gesetzt wird, wenn kein lokaler Minimalwert des gefilterten digitalen lonenstromsignals innerhalb einer vorgegebenen Zeitgrenze nach dem Funkenende erfasst wird

## Revendications

1. Méthode d'analyse de combustion pour un moteur à combustion interne, dans lequel un mélange combustible est allumé dans une chambre de combustion par une étincelle produite par une bougie associée à une bobine d'allumage, ladite méthode comprenant les étapes suivantes:
appliquer une tension de polarisation à la bougie;
détecter un signal de courant ionique variant en fonction de la densité d'ions dans ladite chambre de combustion quand ladite tension de polarisation est appliquée à ladite bougie, ledit signal de courant ionique étant perturbé par des oscillations de bobine résiduelles décroissantes immédiatement après la fin d'étincelle;
déterminer un point de départ d'analyse;
analyser le signal de courant ionique pour obtenir des informations sur la densité d'ions dans la chambre de combustion;
**caractérisé en ce que** le point de départ d'analyse est déterminé par les étapes suivantes
convertir le signal de courant ionique détecté en un signal de courant ionique digital;
filtrer ledit signal de courant ionique digital au moyen d'un filtre digital, ledit filtre digital étant conçu de manière à obtenir un signal de courant ionique digital filtré montrant un pic unique;
détecter la fin d'étincelle;
détecter l'occurrence d'un premier minimum local dudit signal de courant ionique digital filtre après la fin d'étincelle; et
utiliser l'occurrence dudit premier minimum local pour déterminer le point de départ d'analyse

2. Méthode selon la revendication 1, **caractérisé en ce que** l'étape de détection de la fin d'étincelle comprend la détection d'un pic de fin d'étincelle dans le signal de courant ionique digital non-filtre après l'allumage de l'étincelle.

3. Méthode selon la revendication 2, **caractérisé en ce que** la détection du pic de fin d'étincelle dans le signal de courant ionique digital non-filtré comprend l'étape suivante
utilisation d'un signal d'allumage d'un régulateur d'allumage, lequel est associé audit moteur, pour déclencher une étape de détection du pic de fin d'étincelle.

4. Méthode selon la revendication 3, **caractérisé en ce que** ladite étape de détection du pic de fin d'étincelle comprend l'étape suivante
poser un drapeau "Fin d'étincelle" lorsque ledit signal de courant ionique digital non-filtré dépasse un seuil préréglé.

5. Méthode selon l'une quelconque des revendications 1 à 4, **caractérisé par** la compensation en décalage dudit signal de courant ionique digital; et
l'arrêt d'analyse du signal de courant ionique lorsque, après détection dudit premier minimum local dudit signal de courant ionique digital filtré après la fin d'étincelle, ledit signal de courant ionique digital compensé en décalage tombe en dessous d'une valeur seuil.

6. Méthode selon la revendication 5, dans laquelle ladite bobine d'allumage est chargée à un moment donné sous contrôle d'un régulateur d'allumage, associé audit moteur, **caractérisé en ce que** l'étape de compensation en décalage du signal de courant ionique digital comprend les étapes suivantes:
déterminer une valeur moyenne du signal de courant ionique digital pendant une fenêtre juste avant de charger la bobine d'allumage; et
soustraire ladite valeur moyenne du signal de courant ionique digital

7. Méthode selon l'une quelconque des revendications 1 à 6, **caractérisé par**
le stockage d'échantillons de courant ionique digitaux non-filtrés dans une mémoire tampon; et
la reconstitution du signal de courant ionique digital de ladite mémoire tampon, en tenant compte du fait que ledit premier minimum local est détecté avec un certain décalage temporel dû audit filtre digital

8. Méthode selon l'une quelconque des revendications 1 à 7, **caractérisé en ce que** ledit filtre digital est un filtre linéaire

9. Méthode selon la revendication 8, **caractérisé en ce que** ledit filtre digital est de la forme b-carré.

10. Méthode selon la revendication 9, **caractérisé par** un vecteur de filtre avec les coefficients suivants (b étant un entier)
[1, 2, ... , b-1, b, b-1, ..., 2, 1]/b²

11. Méthode selon la revendication 10, **caractérisé en ce que** l'étape d'analyse du signal de courant ionique comprend les étapes de
stocker séquentiellement des échantillons de courant ionique digitaux non-filtrés dans une mémoire tampon; et
reconstituer le signal de courant ionique digital de ladite mémoire tampon en remontant dans le temps de b échantillons

12. Méthode selon l'une quelconque des revendications 1 à 11, **caractérisé en ce qu'**un drapeau "Pas d'allumage" est posé lorsqu'aucun minimum local dudit signal de courant ionique digital filtré n'est détecté dans un délai prédéterminé à partir de ladite fin d'étincelle
